# EUROPEAN PATENT APPLICATION

(11) **EP 3 829 047 A1**
(43) Date of publication of application: **02.06.2021**
(21) Application number: 19275132.9
(22) Date of filing: 28.11.2019
(51) Int. Cl.: H02M 7/483

(54) **CONVERTER**

(71) Applicant: General Electric Technology GmbH, 5400 Baden (CH)
(72) Inventor: Goncalves, Jorge Miguel, Solihull, West Midlands B90 3AQ (GB); Narayanan, Mita Babu, Stafford, ST16 1WS (GB)
(74) Representative: Potter Clarkson

(57) **Abstract**

There is provided a converter (20) for connection to at least one electrical network (36,40), the converter (20) comprising at least one module (44), the or each module (44) including at least one switching element (46) and at least one energy storage device (48), the or each switching element (46) and the or each energy storage device (48) in the or each module (44) arranged to be combinable to selectively provide a voltage source, the converter (20) including a controller (50) configured to selectively control switching of the or each switching element (46) of the or each module (44) in a voltage regulation mode so that a voltage level of the or each energy storage device (48) is regulated within a or a respective hysteresis band, wherein the controller (50) is configured to modify the hysteresis band of the or each energy storage device (48) to reduce a peak voltage value of voltage ripple of the or each energy storage device (48).

## Description

This invention relates to a converter for connection to at least one electrical network, and a method of operating a converter for connection to at least one electrical network. This invention is preferably for use in high voltage direct current (HVDC) transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC.

According to a first aspect of the invention, there is provided a converter for connection to at least one electrical network, the converter comprising at least one module, the or each module including at least one switching element and at least one energy storage device, the or each switching element and the or each energy storage device in the or each module arranged to be combinable to selectively provide a voltage source, the converter including a controller configured to selectively control switching of the or each switching element of the or each module in a voltage regulation mode so that a voltage level of the or each energy storage device is regulated within a or a respective hysteresis band, wherein the controller is configured to modify the hysteresis band of the or each energy storage device to reduce a peak voltage value of voltage ripple of the or each energy storage device.

During the operation of the converter, energy flows through the or each energy storage device of the or each module that is controlled to selectively provide a voltage source. Such flow of energy through the or each energy storage device of the or each module could result in energy accumulation in (or energy loss from) at least one energy storage device, thus resulting in deviation of the energy level of at least one energy storage device from a reference value.

Such a deviation is usually undesirable because, if too little energy is stored within a given energy storage device then the voltage the corresponding module is able to generate is reduced, whereas if too much energy is stored in a given energy storage device then over-voltage problems may arise. The former would require the addition of a power supply to restore the energy level of the affected energy storage device to the reference value, while the latter would require an increase in voltage rating of one or more energy storage devices to prevent the over-voltage problems, thus adding to the overall size, weight and cost of the converter.

Accordingly an energy stored in the or each energy storage device may be regulated to maintain the or each energy storage device at a predefined voltage level or within a predefined voltage range in order to obviate the abovementioned problems associated with a deviation of the energy level of at least one energy storage device from the reference value. This is achieved by regulating the voltage level of the or each energy storage device within a or a respective hysteresis band.

The converter may be required to operate under conditions that result in large energy storage device voltage ripple, which may have a peak voltage value that exceeds a voltage limit or rating of the or each energy storage device. This could cause damage to or failure of the or each energy storage device and/or lead to shutdown of the converter, which not only requires costly and time-wasting maintenance and repair but also cause inconvenience to users of the or each electrical network.

The provision of the controller in the converter of the invention provides a control-based way of reducing the peak voltage value of voltage ripple of the or each energy storage device below a reference voltage threshold that is equal to or below the voltage limit or rating of the or each energy storage device. More specifically, the invention reduces the peak voltage value of voltage ripple of the or each energy storage device through modification of the hysteresis band of the or each energy storage device in the voltage regulation mode.

One possible alternative to the solution provided by the invention is to increase the number of modules in the converter to cope with the conditions that result in large energy storage device voltage ripple so that a target operating voltage of the or each energy storage device may be reduced. This however not only increases the size, weight, cost and operating losses of the converter but also decreases the number of auxiliary hardware associated with the converter, such as control electronics, sensors and protection devices. Another possible alternative to the solution provided by the invention would be to directly lower the target operating voltage of the or each energy storage device but this approach imposes a limit on the overall operating voltage of the converter.

In contrast, the configuration of the controller not only enables the converter of the invention to cope with the large energy storage device ripple using the same number of modules required to meet the nominal power output requirement but also removes the need to reduce the target operating voltage of the or each energy storage device which could have a limiting effect on the performance of the converter. Hence, the converter of the invention results in a smaller required number of modules that reduces the size, weight, cost and operating losses of the converter, reduces the number of redundant modules and reduces time spent in maintaining and repairing the converter.

Under certain operating conditions, the converter may be required to at least temporarily supply a power overload beyond its nominal power output which may result in large energy storage device voltage ripple. Optionally the controller may be configured to modify the hysteresis band of the or each energy storage device to reduce the peak voltage value of voltage ripple of the or each energy storage device during an operation of the converter to supply a power overload. The modification of the hysteresis band may be carried out in response to the supply of the power overload, in response to a demand for the supply of the power overload, or in advance of the supply of the power overload.

The invention enables the controlled reduction of the peak voltage value of voltage ripple of the or each energy storage device to cope with the large energy storage device voltage ripple and thereby enables the converter to operate in power overload conditions using the same number of modules that is used to meet the nominal power output requirement. Hence, the invention increases the inherent power overload capability of the converter without requiring additional hardware in the form of one or more additional modules and any associated equipment, which results in a more cost-efficient and space-saving converter.

It will be appreciated that the invention is not limited to any particular configuration of the converter that comprises at least one module, the or each module including at least one switching element and at least one energy storage device, the or each switching element and the or each energy storage device in the or each module arranged to be combinable to selectively provide a voltage source. For example, in the particular case of a converter in a bipolar power transmission scheme, the invention allows for enhanced power transmission capability in the event of loss of a pole by enabling a reduction in the peak voltage value of voltage ripple of the or each energy storage device so that the converter can operate in power overload conditions above its nominal power output capacity to minimise any disturbance to an associated AC network. Thereafter, upon isolation of a faulted section, the previously faulty pole can resume operation, for example in static synchronous converter mode, to support a voltage of the AC network.

In embodiments of the invention, the controller may be configured to reduce a width of the hysteresis band of the or each energy storage device to reduce the peak voltage value of voltage ripple of the or each energy storage device. In such embodiments, the controller may be configured to reduce the width of the hysteresis band of the or each energy storage device by modifying an upper reference limit of the hysteresis band and/or modifying a lower reference limit of the hysteresis band.

Configuring the controller as such provides a reliable means of modifying the hysteresis band of the or each energy storage device to reduce a peak voltage value of voltage ripple of the or each energy storage device.

The converter may comprise a plurality of modules.

When the converter comprises a plurality of modules, the controller may be configured to selectively control switching of the switching elements of the modules in a voltage balancing mode so that the voltage levels of the energy storage devices are balanced by regulating the voltage level of each energy storage device within the respective hysteresis band.

Regulation of the energy stored in a given energy storage device allows the voltage of any particular energy storage device to be kept at an average value to simplify the control and improve the performance of a converter which uses the average value as feedback to control switching of the or each switching element of or each module.

Optionally the converter may include a plurality of switching valves, each switching valve including at least one module. The controller may be configured to selectively control switching of the or each switching element of the or each module of each switching valve in a voltage regulation mode so that a voltage level of the or each energy storage device of each switching valve is regulated within a or a respective hysteresis band, wherein the controller may be configured to perform the voltage regulation mode of each switching valve independently of the voltage regulation mode of the or each other switching valve. This provides the converter with greater flexibility to cope with the large energy storage device voltage ripple by permitting the modification of the hysteresis band of the or each energy storage device to reduce a peak voltage value of voltage ripple of the or each energy storage device to be carried out on a per switching valve basis, instead of being carried out across all of the switching valves in a single operation.

There are several ways of configuring the controller to modify the hysteresis band of the or each energy storage device, non-limiting examples of which are described as follows.

In embodiments of the invention, the controller may be configured to modify the hysteresis band of the or each energy storage device based on a reference, calculated, estimated or predicted hysteresis band to reduce a peak voltage value of voltage ripple of the or each energy storage device.

In further embodiments of the invention, the controller may be configured to process at least one reference, measured, calculated, estimated or predicted parameter of the converter and/or the or each electrical network to modify the hysteresis band of the or each energy storage device to reduce the peak voltage value of voltage ripple of the or each energy storage device.

In still further embodiments of the invention, the controller may be configured to process at least one reference, measured, calculated, estimated or predicted operating set point of the converter and/or the or each electrical network to modify the hysteresis band of the or each energy storage device to reduce the peak voltage value of voltage ripple of the or each energy storage device.

According to a second aspect of the invention, there is provided a method of operating a converter for connection to at least one electrical network, the converter comprising at least one module, the or each module including at least one switching element and at least one energy storage device, the or each switching element and the or each energy storage device in the or each module arranged to be combinable to selectively provide a voltage source, wherein the method comprises the steps of: selectively controlling switching of the or each switching element of the or each module in a voltage regulation mode so that a voltage level of the or each energy storage device is regulated within a or a respective hysteresis band; and modifying the hysteresis band of the or each energy storage device to reduce a peak voltage value of voltage ripple of the or each energy storage device. The features and advantages of the converter of the first aspect of the invention and its embodiments apply mutatis mutandis to the method of the second aspect of the invention and its embodiments.

The method of the invention may include the step of modifying the hysteresis band of the or each energy storage device to reduce the peak voltage value of voltage ripple of the or each energy storage device during an operation of the converter to supply a power overload.

The method of the invention may include the step of reducing a width of the hysteresis band of the or each energy storage device to reduce the peak voltage value of voltage ripple of the or each energy storage device.

The method of the invention may include the step of reducing the width of the hysteresis band of the or each energy storage device by modifying an upper reference limit of the hysteresis band and/or modifying a lower reference limit of the hysteresis band.

In the method of the invention, the converter may comprise a plurality of modules.

When the converter comprises a plurality of modules, the method of the invention may include the step of selectively controlling switching of the switching elements of the modules in a voltage balancing mode so that the voltage levels of the energy storage devices are balanced by regulating the voltage level of each energy storage device within the respective hysteresis band.

In the method of the invention, the converter may include a plurality of switching valves, each switching valve including at least one module. The method of the invention may include the steps of: selectively controlling switching of the or each switching element of the or each module of each switching valve in a voltage regulation mode so that a voltage level of the or each energy storage device of each switching valve is regulated within a or a respective hysteresis band; and performing the voltage regulation mode of each switching valve independently of the voltage regulation mode of the or each other switching valve.

The method of the invention may include the step of modifying the hysteresis band of the or each energy storage device based on a reference, calculated, estimated or predicted hysteresis band to reduce a peak voltage value of voltage ripple of the or each energy storage device.

The method of the invention may include the step of processing at least one reference, measured, calculated, estimated or predicted parameter of the converter and/or the or each electrical network to modify the hysteresis band of the or each energy storage device to reduce the peak voltage value of voltage ripple of the or each energy storage device.

The method of the invention may include the step of processing at least one reference, measured, calculated, estimated or predicted operating set point of the converter and/or the or each electrical network to modify the hysteresis band of the or each energy storage device to reduce the peak voltage value of voltage ripple of the or each energy storage device.

The or each module may vary in configuration, non-limiting examples of which are set out as follows.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

A plurality of modules may be connected in series to define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. As such the chain-link converter is capable of providing a wide range of complex voltage waveforms.

At least one switching element may be a wide-bandgap material based switching element or a silicon semiconductor based switching element. Examples of wide-bandgap materials include, but are not limited to, silicon carbide, boron nitride, gallium nitride and aluminium nitride.

At least one switching element may include at least one self-commutated switching device. The or each self-commutated switching device may be an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

The configuration of the converter may vary depending on its operating requirements.

In embodiments of the invention, the converter may include at least one converter limb and a plurality of modules, the or each converter limb extending between a pair of first terminals defining first and second DC terminals, the or each converter limb including first and second limb portions separated by a second terminal defining an AC terminal, each limb portion including at least one of the modules.

In a preferred embodiment of the invention, the converter includes three converter limbs, each of which is connectable via the respective AC terminal to a respective phase of a three-phase AC network. It will be appreciated that the converter may include a different number of converter limbs, each of which is connectable via the respective AC terminal to a respective phase of an AC network with the corresponding number of phases.

It will be appreciated that the use of the terms "first" and "second", and the like, in this patent specification is merely intended to help distinguish between similar features (e.g. the first and second electrical networks), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

A preferred embodiment of the invention will now be described, by way of a non-limiting example, with reference to the accompanying drawings in which:
Figure 1 shows a voltage source converter according to an embodiment of the invention;
Figures 2 and 3 respectively show exemplary half-bridge and full-bridge chain-link module configurations of a module of the voltage source converter of Figure 1;
Figure 4 illustrates an exemplary modification of a voltage hysteresis band of a module to reduce voltage ripple in response to the voltage source converter of Figure 1 supplying a power overload;
Figure 5 illustrates an exemplary determination of a modified width of a voltage hysteresis band of a module to reduce voltage ripple;
Figure 6 illustrates a variation of a voltage level of an individual capacitor of the voltage source converter of Figure 1; and
Figure 7 illustrates a maximum capacitor voltage level of a limb portion of the voltage source converter of Figure 1.

The figures are not necessarily to scale, and certain features and certain views of the figures may be shown exaggerated in scale or in schematic form in the interests of clarity and conciseness.

The following embodiment of the invention is used primarily in HVDC applications, but it will be appreciated that the following embodiment of the invention is applicable mutatis mutandis to other applications operating at different voltage levels. The following embodiment of the invention is described with reference to an AC-DC voltage source converters, but it will be appreciated that the following embodiment of the invention is applicable mutatis mutandis to other types of converters including AC-AC converters and DC-DC converters.

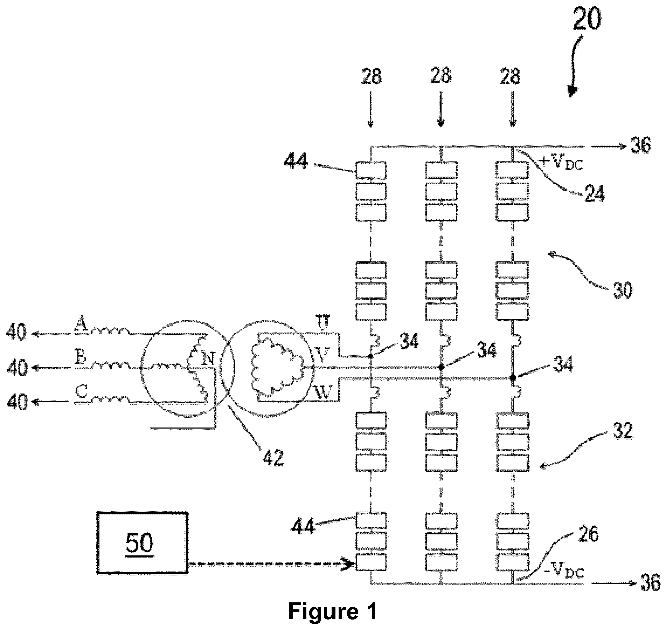

A voltage source converter according to an embodiment of the invention is shown in Figure 1 and is designated generally by the reference numeral 20.

The voltage source converter 20 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34.

In use, the first and second DC terminals 24,26 of the voltage source converter 20 are respectively connected to a DC network 36. In use, the AC terminal 34 of each converter limb 28 of the voltage source converter 20 is connected to a respective AC phase of a three-phase AC network 40 via a star-delta transformer arrangement 42. The three-phase AC network 40 is an AC power grid 40. It is envisaged that, in other embodiments of the invention, the transformer arrangement may be a different type of transformer arrangement, such as a star-star transformer arrangement.

Each limb portion 30,32 includes a switching valve, which includes a chain-link converter that is defined by a plurality of series-connected modules 44.

Each module 44 may vary in topology, examples of which are described as follows.

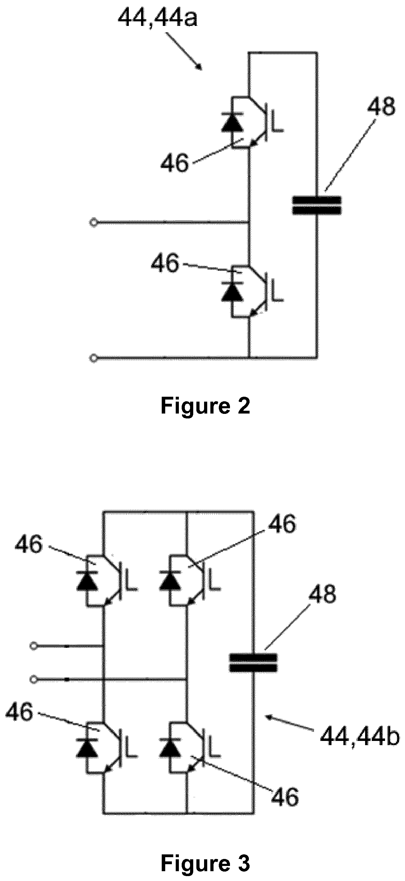

Figure 2 shows schematically the structure of an exemplary module 44 in the form of a half-bridge module 44a. The half-bridge module 44a includes a pair of switching elements 46 and a capacitor 48. Each switching element 46 of the half-bridge module 44a is in the form of an IGBT which is connected in parallel with an anti-parallel diode. The pair of switching elements 46 are connected in parallel with the capacitor 48 in a half-bridge arrangement to define a 2-quadrant unipolar module 44a that can provide zero or positive voltage and can conduct current in both directions.

Figure 3 shows schematically the structure of an exemplary module 44 in the form of a full-bridge module 44b. The full-bridge module 44b includes two pairs of switching elements 46 and a capacitor 48. Each switching element 46 of the full-bridge module 44b is in the form of an IGBT which is connected in parallel with an anti-parallel diode. The pairs of switching elements 46 are connected in parallel with the capacitor 48 in a full-bridge arrangement to define a 4-quadrant bipolar module 44b that can provide negative, zero or positive voltage and can conduct current in both directions.

The structure of a given module 44 includes the arrangement and type of switching elements 46 and energy storage device 48 used in the given module 44. It will be appreciated that it is not essential for all of the modules 44 to have the same module structure. For example, the plurality of modules 44 may comprise a combination of half-bridge modules 44a and full-bridge modules 44b.

It is envisaged that, in other embodiments of the invention, each switching element 46 of each module 44 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 48 of each module 44 is selectively bypassed or inserted into the corresponding chain-link converter by changing the states of the switching elements 46. This selectively directs current through the capacitor 48 or causes current to bypass the capacitor 48, so that the module 44 provides a zero or non-zero voltage.

The capacitor 48 of the module 44 is bypassed when the switching elements 46 in the module 44 are configured to form a short circuit in the module 44, whereby the short circuit bypasses the capacitor 48. This causes current in the corresponding chain-link converter to pass through the short circuit and bypass the capacitor 48, and so the module 44 provides a zero voltage, i.e. the module 44 is configured in a bypassed mode.

The capacitor 48 of the module 44 is inserted into the corresponding chain-link converter when the switching elements 46 in the module 44 are configured to allow the current in the corresponding chain-link converter to flow into and out of the capacitor 48. The capacitor 48 then charges or discharges its stored energy so as to provide a non-zero voltage, i.e. the module 44 is configured in a non-bypassed mode.

In this manner the switching elements 46 in each module 44 are switchable to control flow of current through the corresponding capacitor 48.

It is possible to build up a combined voltage across each chain-link converter, which is higher than the voltage available from each of its individual modules 44, via the insertion of the capacitors of multiple modules 44, each providing its own voltage, into each chain-link converter. In this manner switching of the switching elements 46 in each module 44 causes each chain-link converter to provide a stepped variable voltage source, which permits the generation of a voltage waveform across each chain-link converter using a step-wise approximation. Hence, the switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each module 44 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 48 in each module 44 may be replaced by another type of energy storage device which is capable of storing and releasing energy to provide a voltage, e.g. a battery or a fuel cell.

The voltage source converter further includes a controller 50 configured, e.g. programmed, to control the switching of the switching elements 46.

For the purposes of simplicity, the controller 50 is exemplarily described with reference to its implementation as a single control unit. In other embodiments, the controller 50 may be implemented as a plurality of control units. The configuration of the controller 50 may vary depending on specific requirements of the voltage source converter 20. For example, the controller 50 may include a plurality of control units, each of which is configured to control the switching of the switching elements 46 of a respective one of the modules 44. Each control unit may be configured to be internal to, or external of, the corresponding module 44. Alternatively, the controller may include a combination of one or more control units internal to the corresponding module 44 and one or more control units external of the corresponding module 44. Each control unit may be configured to communicate with at least one other control unit via telecommunications links.

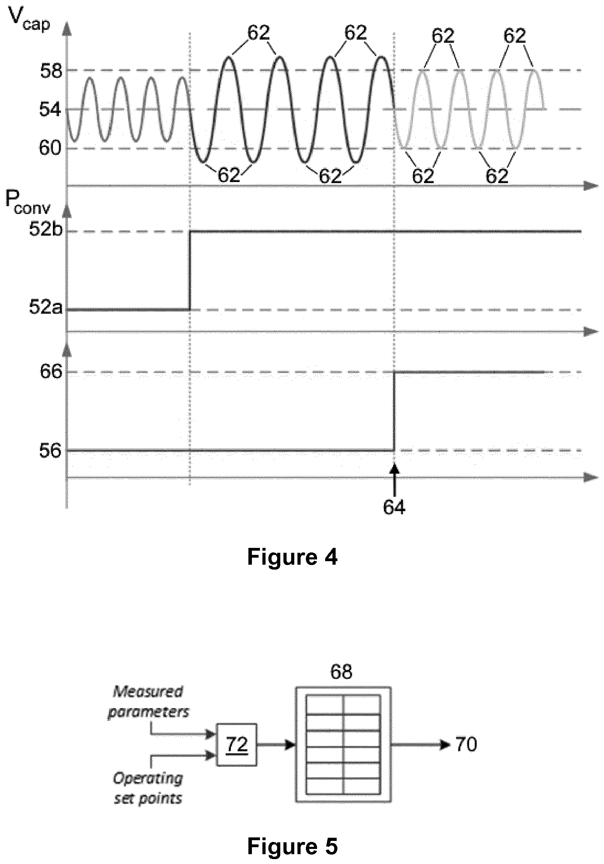

Operation of the voltage source converter 20 is described as follows with reference to Figures 4 to 7.

In order to transfer power between the DC and AC networks 36,40, the controller 50 controls the switching of the switching elements 46 of the modules 44 to switch the capacitors of the respective limb portions 30,32 into and out of circuit between the respective DC and AC terminals 24,26,34 to interconnect the DC and AC networks 36,40. The controller 50 switches the switching elements 46 of the modules 44 of each limb portion 30,32 to provide a stepped variable voltage source between the respective DC and AC terminals 24,26,34 and thereby generate a voltage waveform so as to control the configuration of an AC voltage waveform at the corresponding AC terminal 34 to facilitate the transfer of power between the DC and AC networks 36,40.

During the transfer of power, the controller 50 controls the switching of the switching elements 46 of the modules 44 in a voltage balancing mode by regulating the voltage level of each capacitor 48 within a respective voltage hysteresis band that is defined by upper and lower reference voltage limits. This offsets the effect of any energy accumulation in (or energy loss from) at least one capacitor 48 that results in deviation of the energy level of at least one capacitor 48 from a reference value. By regulating the energy stored in each capacitor 48 in this manner, the voltage of each capacitor 48 can be maintained at an average value over a period of time, for example a power cycle, in order to allow the use of the average value as feedback to control switching of the switching elements 46 of the modules 44. The width, the upper lower reference voltage limit and the lower reference voltage limit of each voltage hysteresis band are set to maintain balance between the voltage levels of the capacitors 48 and ensure an appropriate switching frequency for each module 44.

To illustrate how the invention works, the voltage balancing mode is described with reference to balancing of the voltage levels of the capacitors 48 of the modules 44 in the same limb portion 30,32. It will however be appreciated that the voltage balancing mode may additionally or alternatively involve the voltage levels of the capacitors 48 of the modules 44 in the same converter limb 28, across different converter limbs 28 or across the entire voltage source converter 22.

The voltage source converter 20 may be required to supply a power overload beyond its nominal power output capacity under certain operating conditions. For example, in the event of a fault in the DC network 36, the voltage source converter 20 may be required to supply a power overload to the DC network 36. As a result of supplying the power overload, the capacitor 48 of each module 44 experiences large capacitor voltage ripple, which may lead to an undesirable situation in which a peak voltage value of the voltage ripple exceeds a voltage limit or rating of the capacitor 48. This in turn may cause damage to or failure of the capacitors 48 and/or lead to shutdown of the voltage source converter 20.

To avoid the aforementioned undesirable situation during the operation of the voltage source converter 20 to supply the power overload, the controller 50 reduces a width of the voltage hysteresis band of each capacitor 48 by modifying the upper reference voltage limit of the voltage hysteresis band and/or modifying the lower reference voltage limit of the voltage hysteresis band. This has the effect of reducing the peak voltage value of voltage ripple of each capacitor 48 below a reference voltage threshold that is equal to or below the voltage limit or rating of each capacitor 48.

Figure 4 illustrates the variation in voltage level V_{cap} of a capacitor 48 of an individual module 44 resulting from a time-varying power output P_{conv} of the voltage source converter 20.

When the voltage source converter 20 is operated to provide its nominal power output 52a, the voltage level V_{cap} of the capacitor 48 is maintained at an average value 54 over each power cycle through regulation of the voltage level V_{cap} of the capacitor 48 within a voltage hysteresis band with a predefined width 56. Meanwhile the time-varying voltage level V_{cap} of the capacitor 48 stays within a voltage range defined by the maximum and minimum voltage limits 58,60 of the capacitor 48.

Thereafter, when the voltage source converter 20 is operated to supply a power overload 52b, the voltage level V_{cap} of the capacitor 48 continues to be maintained at an average value 54 over each power cycle through regulation of the voltage level V_{cap} of the capacitor 48 within the original voltage hysteresis band with the predefined width 56. However, due to the power overload 52b resulting in the capacitor 48 experiencing large capacitor voltage ripple, the peak voltage values 62 of the voltage ripple of the capacitor 48 now exceed the maximum and minimum voltage limits 58,60 of the capacitor 48.

Through the application 64 of a reduced width 66 of the voltage hysteresis band used to regulate the voltage level V_{cap} of the capacitor 48, the peak voltage values 62 of the voltage ripple of the capacitor 48 are reduced to be within the voltage range defined by the maximum and minimum voltage limits 58,60 of the capacitor 48, without impacting on the maintenance of the voltage level V_{cap} of the capacitor 48 at an average value 54 over each power cycle.

The reduction of the width of the voltage hysteresis band of each capacitor 48 is carried out by processing at least one value that is, or corresponds to, at least one parameter and/or at least one operating set point of the voltage source converter 20 and/or the DC and AC networks 36,40. The or each such value may be or may correspond to a power or voltage of the voltage source converter (or a component thereof) and/or the DC and AC networks 36,40 (or a component thereof). The or each such value may be measured in real-time from the voltage source converter 20 and/or the DC and AC networks 36,40. Additionally or alternatively, the or each such value may be referenced, calculated, estimated or predicted based on past and/or current information about the voltage source converter 20 and/or the DC and AC networks 36,40. A look-up table 68 may be employed to determine a required reduced width 70 of the voltage hysteresis band of each capacitor 48 from the or each measured, calculated, estimated or predicted value with the help of, for example, a logic circuit 72, as shown in Figure 5.

The modification of the voltage hysteresis band of each capacitor 48 may be carried out in response to the supply of the power overload, in response to a demand for the supply of the power overload or in advance of the supply of the power overload.

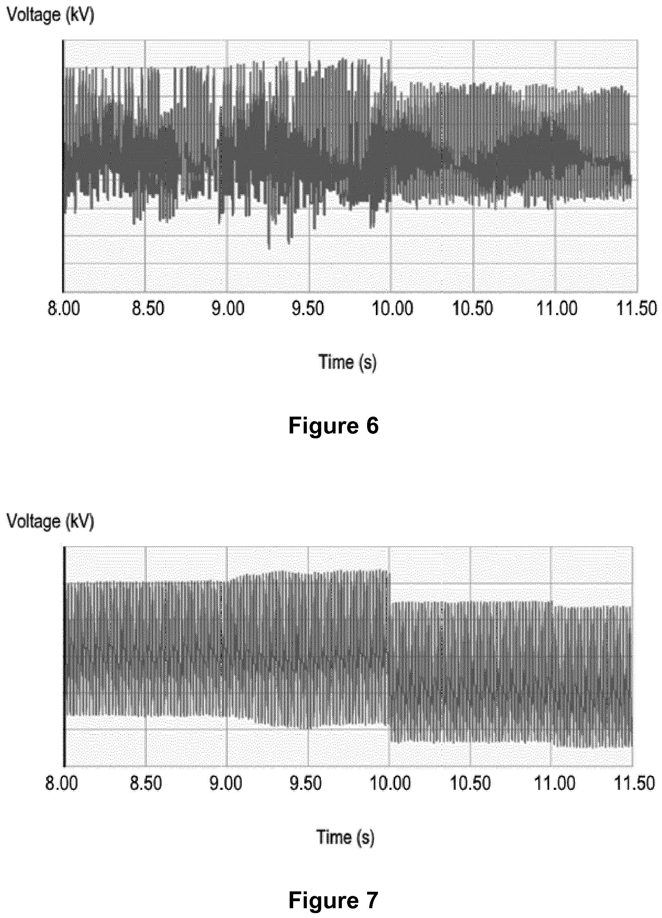

Figure 6 illustrates a variation of a voltage level of an individual capacitor 44, while Figure 7 illustrates a maximum capacitor voltage level of a limb portion of the voltage source converter 20.

In Figures 6 and 7, the voltage source converter 20 is operated to provide a power overload at time = 9 seconds. At this stage the width of the voltage hysteresis band of each capacitor 48 is an initial value of X V. In order to cope with the large capacitor voltage ripple, the width of the voltage hysteresis band of each capacitor 48 is reduced to 0.25X V between time = 10 seconds and time = 11 seconds, and the width of the voltage hysteresis band of each capacitor 48 is further reduced to 0.125X V at time = 11 seconds. It will be appreciated that the value of X may vary depending on the power capabilities and requirements of the voltage source converter 20. It will also be appreciated that the above values of the reduced width of the voltage hysteresis band of each capacitor 48 are intended as non-limiting examples for the purposes of illustrating how the invention works.

It can be seen from Figure 6 that the initial reduction of the width of the voltage hysteresis band results in a lower peak voltage value of voltage ripple of each capacitor 48, and that the further reduction of the width of the voltage hysteresis band results in a further lower peak voltage value of voltage ripple of each capacitor 48. It can be seen from Figure 7 that the initial reduction of the width of the voltage hysteresis band results in a lower peak voltage value of voltage ripple of the limb portion 30,32, and that the further reduction of the width of the voltage hysteresis band results in a further lower peak voltage value of voltage ripple of the limb portion 30,32.

Therefore, by modifying the hysteresis band of each capacitor 48 in the voltage balancing mode, the invention enables the controlled reduction of the peak voltage value of voltage ripple of each capacitor 48 to cope with the large capacitor voltage ripple. As a result, the voltage source converter 20 has an increased inherent power overload capability to enable it to reliably operate in power overload conditions using the same number of modules 44 that is used to meet the nominal power output requirement. This is without having to add one or more additional modules or reduce a target operating voltage of each capacitor 48 to help cope with the large capacitor voltage ripple. Hence, the voltage source converter 20 requires a smaller required number of modules 44 that reduces its overall size, weight, cost and operating losses, reduces the number of redundant modules and reduces time spent in carrying out maintenance and repair.

Although the foregoing embodiment of the invention is described with reference to the operation of the voltage source converter 20 in power overload conditions, it will be understood that the ability of the invention to facilitate the controlled reduction of the peak voltage value of voltage ripple of the capacitors 48 can be used in other operating conditions of the voltage source converter 20 that causes large capacitor voltage ripple.

Preferences and options for a given aspect, feature or parameter of the invention should, unless the context indicates otherwise, be regarded as having been disclosed in combination with any and all preferences and options for all other aspects, features and parameters of the invention.

## Claims

1. A converter (20) for connection to at least one electrical network (36,40), the converter (20) comprising at least one module (44), the or each module (44) including at least one switching element (46) and at least one energy storage device (48), the or each switching element (46) and the or each energy storage device (48) in the or each module (44) arranged to be combinable to selectively provide a voltage source, the converter (20) including a controller (50) configured to selectively control switching of the or each switching element (46) of the or each module (44) in a voltage regulation mode so that a voltage level of the or each energy storage device (48) is regulated within a or a respective hysteresis band, wherein the controller (50) is configured to modify the hysteresis band of the or each energy storage device (48) to reduce a peak voltage value (62) of voltage ripple of the or each energy storage device (48).

2. A converter (20) according to Claim 1 wherein the controller (50) is configured to modify the hysteresis band of the or each energy storage device (48) to reduce the peak voltage value (62) of voltage ripple of the or each energy storage device (48) during an operation of the converter (20) to supply a power overload (52b).

3. A converter (20) according to any one of the preceding claims wherein the controller (50) is configured to reduce a width (56,66) of the hysteresis band of the or each energy storage device (48) to reduce the peak voltage value (62) of voltage ripple of the or each energy storage device (48).

4. A converter (20) according to Claim 3 wherein the controller (50) is configured to reduce the width (56,66) of the hysteresis band of the or each energy storage device (48) by modifying an upper reference limit of the hysteresis band and/or modifying a lower reference limit of the hysteresis band.

5. A converter (20) according to any one of the preceding claims including a plurality of modules (44), wherein the controller (50) is configured to selectively control switching of the switching elements of the modules (44) in a voltage balancing mode so that the voltage levels of the energy storage devices (48) are balanced by regulating the voltage level of each energy storage device (48) within the respective hysteresis band.

6. A converter (20) according to any one of the preceding claims including a plurality of switching valves, each switching valve including at least one module (44), wherein the controller (50) is configured to selectively control switching of the or each switching element (46) of the or each module (44) of each switching valve in a voltage regulation mode so that a voltage level of the or each energy storage device (48) of each switching valve is regulated within a or a respective hysteresis band, wherein the controller is configured to perform the voltage regulation mode of each switching valve independently of the voltage regulation mode of the or each other switching valve.

7. A converter (20) according to any one of the preceding claims wherein the controller (50) is configured to modify the hysteresis band of the or each energy storage device (48) based on a reference, calculated, estimated or predicted hysteresis band to reduce a peak voltage value of voltage ripple of the or each energy storage device (48).

8. A converter (20) according to any one of the preceding claims wherein the controller (50) is configured to process at least one measured, calculated, estimated or predicted parameter and/or at least one measured, calculated, estimated or predicted operating set point of the converter (20) and/or the or each electrical network (36,40) to modify the hysteresis band of the or each energy storage device (48) to reduce the peak voltage value (62) of voltage ripple of the or each energy storage device (48).

9. A method of operating a converter (20) for connection to at least one electrical network (36,40), the converter (20) comprising at least one module (44), the or each module (44) including at least one switching element (46) and at least one energy storage device (48), the or each switching element (46) and the or each energy storage device (48) in the or each module (44) arranged to be combinable to selectively provide a voltage source, wherein the method comprises the steps of: selectively controlling switching of the or each switching element (46) of the or each module (44) in a voltage regulation mode so that a voltage level of the or each energy storage device (48) is regulated within a or a respective hysteresis band; and modifying the hysteresis band of the or each energy storage device (48) to reduce a peak voltage value (62) of voltage ripple of the or each energy storage device (48).

10. A method according to Claim 9 including the step of modifying the hysteresis band of the or each energy storage device (48) to reduce the peak voltage value (62) of voltage ripple of the or each energy storage device (48) during an operation of the converter (20) to supply a power overload (52b).

11. A method according to Claim 9 or Claim 10 including the step of reducing a width (56,66) of the hysteresis band of the or each energy storage device (48) to reduce the peak voltage value (62) of voltage ripple of the or each energy storage device (48), and optionally wherein the method includes the step of reducing the width (56,66) of the hysteresis band of the or each energy storage device (48) by modifying an upper reference limit of the hysteresis band and/or modifying a lower reference limit of the hysteresis band.

12. A method according to any one of Claims 9 to 11 wherein the converter (20) includes a plurality of modules (44), and the method includes the step of selectively controlling switching of the switching elements of the modules (44) in a voltage balancing mode so that the voltage levels of the energy storage devices (48) are balanced by regulating the voltage level of each energy storage device (48) within the respective hysteresis band.

13. A method according to any one of Claims 9 to 12 wherein the converter (20) includes a plurality of switching valves, each switching valve including at least one module (44), wherein the method includes the steps of: selectively controlling switching of the or each switching element (46) of the or each module (44) of each switching valve in a voltage regulation mode so that a voltage level of the or each energy storage device (48) of each switching valve is regulated within a or a respective hysteresis band; and performing the voltage regulation mode of each switching valve independently of the voltage regulation mode of the or each other switching valve.

14. A method according to any one of Claims 9 to 13 including the step of modifying the hysteresis band of the or each energy storage device (48) based on a reference, calculated, estimated or predicted hysteresis band to reduce a peak voltage value (62) of voltage ripple of the or each energy storage device (48).

15. A method according to any one of Claims 9 to 14 including the step of processing at least one measured, calculated, estimated or predicted parameter and/or at least one measured, calculated, estimated or predicted operating set point of the converter (20) and/or the or each electrical network (36,40) to modify the hysteresis band of the or each energy storage device (48) to reduce the peak voltage value of voltage ripple of the or each energy storage device (48).
